# EUROPEAN PATENT SPECIFICATION

(11) **EP 4 435 722 B1**
(45) Date of publication and mention of the grant of the patent: **02.09.2026**
(21) Application number: 23220011.3
(22) Date of filing: 22.12.2023
(51) Int. Cl.: G06T 7/80, G06T 7/73

(54) **METHOD FOR VERIFYING CALIBRATED EXTRINSIC PARAMETER VALUES OF CAMERA, DEVICE AND MEDIUM**
VERFAHREN ZUR ÜBERPRÜFUNG VON KALIBRIERTEN EXTRINSISCHEN PARAMETERWERTEN EINER KAMERA, VORRICHTUNG UND MEDIUM
PROCÉDÉ DE VÉRIFICATION DE VALEURS DE PARAMÈTRES EXTRINSÈQUES ÉTALONNÉES D'UNE CAMÉRA, DISPOSITIF ET SUPPORT

(30) Priority: 20.03.2023 CN 202310281589
(43) Date of publication of application: 25.09.2024
(73) Proprietor: Nio Technology (Anhui) Co., Ltd, Hefei City, Anhui 230601 (CN)
(72) Inventor: ZHANG, Zhen, Hefei City, Anhui, 230601 (CN)
(74) Representative: Vossius & Partner Patentanwälte Rechtsanwälte mbB

(56) References cited:
- WO-A1-2019/050417
- JP-B2- 7 038 346
- US-A1- 2021 112 190

## Description

The present application claims priority of CN patent application 202310281589.6 filed on March 20, 2023 with the title "Method for verifying calibrated extrinsic parameter values of camera, device and medium".

### Technical Field

The disclosure relates to the field of computer vision technologies, and specifically, to a method for verifying calibrated extrinsic parameter values of a camera, a device, and a medium.

### Background Art

Cameras are one of the most important sensors for a vehicle to achieve autonomous driving. Therefore, calibration of cameras in relation to their installation positions on the vehicle (that is, extrinsic parameters R/T) is of utmost importance. Accurate extrinsic parameters can improve the accuracy of algorithms such as perception and fusion, and also provide effective initial value guarantee for secondary development of the backend.

Using a single method to check calibrated parameters of a camera has strong limitations, low applicability, and the verification results are not comprehensive and accurate. It does not consider the verification of iterative interference, and cannot check whether calibrated extrinsic parameter values have reached optimal values. Document JP7038346B2 discloses a technique for calculating camera parameters.

Accordingly, there is a need for a new technical solution in the field to solve the problem described above.

### Summary

To overcome the above defects, the disclosure is proposed to provide a method for verifying calibrated extrinsic parameter values of a camera, a device, and a medium that solve or at least partially solve the technical problem of being unable to check whether calibrated extrinsic parameter values of a camera are optimal values.

In a first aspect, there is provided a method for verifying calibrated extrinsic parameter values of a camera, the method including:
applying a plurality of perturbations to the calibrated extrinsic parameter values of the camera, and obtaining at least one perturbed extrinsic parameter value based on any one of the perturbations applied;
calculating first reprojection errors respectively corresponding to the calibrated extrinsic parameter values and the perturbed extrinsic parameter value; and
verifying, based on a comparison between an extrinsic parameter value corresponding to a minimum first reprojection error in the first reprojection errors and the calibrated extrinsic parameter values, whether the calibrated extrinsic parameter values are optimal values.

In a technical solution of the above method for verifying calibrated extrinsic parameter values of a camera, the applying a plurality of perturbations to the calibrated extrinsic parameter values of the camera, and obtaining at least one perturbed extrinsic parameter value based on any one of the perturbations applied includes:
setting a number of iterations for applying the perturbations;
in any one of the iterations, applying at least one perturbation to the calibrated extrinsic camera parameter values to obtain at least one corresponding perturbed extrinsic parameter value, where a perturbation step size of perturbations applied in an iteration is less than a perturbation step size of perturbations applied in a previous iteration.

In a technical solution of the above method for verifying calibrated extrinsic parameter values of a camera, the verifying, based on a comparison between an extrinsic parameter value corresponding to a minimum first reprojection error in the first reprojection errors and the calibrated extrinsic parameter values, whether the calibrated extrinsic parameter values are optimal values includes:
S30: comparing first reprojection errors corresponding to a current iteration, to obtain a minimum first reprojection error in the first reprojection errors;
S32: comparing whether an extrinsic parameter value corresponding to the minimum first reprojection error is equal to the calibrated extrinsic parameter values;
S34: if the extrinsic parameter value corresponding to the minimum first reprojection error in the current iteration is not equal to the calibrated extrinsic parameter values, verifying the calibrated extrinsic parameter values as not optimal values;
   and/or
S36: if the extrinsic parameter value corresponding to the minimum first reprojection error in the current iteration is equal to the calibrated extrinsic parameter values, repeating steps S30 and S32 based on first reprojection errors obtained in a next iteration, until the number of iterations is reached.

In a technical solution of the above method for verifying calibrated extrinsic parameter values of a camera, the verifying, based on a comparison between an extrinsic parameter value corresponding to a minimum first reprojection error in the first reprojection errors and the calibrated extrinsic parameter values, whether the calibrated extrinsic parameter values are optimal values further includes:
if throughout all of the number of iterations, the extrinsic parameter value corresponding to the minimum first reprojection error is equal to the calibrated extrinsic parameter values, verifying the calibrated extrinsic parameter values as optimal values.

In a technical solution of the above method for verifying calibrated extrinsic parameter values of a camera, the method further includes:
obtaining the calibrated extrinsic parameter values of the camera based on three-dimensional coordinate points under a world coordinate system, corresponding pixels under an image coordinate system, and intrinsic camera parameters.

In a technical solution of the above method for verifying calibrated extrinsic parameter values of a camera, the method further includes:
mapping the three-dimensional coordinate point under the world coordinate system to the image coordinate system based on the calibrated extrinsic parameter values, to obtain a calculated value of the corresponding pixel;
calculating a Euclidean distance between an observed value of the pixel and the calculated value;
obtaining a second reprojection error based on the Euclidean distance; and
verifying, based on the second reprojection error, whether the calibrated extrinsic camera parameter values are optimal values.

In a technical solution of the above method for verifying calibrated extrinsic parameter values of a camera, the method further includes:
selecting a same pixel from a plurality of image coordinate systems;
mapping the selected pixel under any one of the plurality of image coordinate systems to another image coordinate system, to obtain a corresponding calculated value;
calculating a Euclidean distance between an observed value of the pixel under the another image coordinate system and the calculated value;
obtaining an inter-camera reprojection error based on the Euclidean distance; and
verifying, based on the inter-camera reprojection error, whether the calibrated extrinsic parameter values are optimal values.

In a technical solution of the above method for verifying calibrated extrinsic parameter values of a camera, the method further includes:
comparing the calibrated extrinsic parameter values with a design value to check a deviation degree of the camera.

In a second aspect, an electronic device is provided. The electronic device includes a processor and a storage apparatus adapted to store a plurality of pieces of program code, where the program code is adapted to be loaded and run by the processor to perform the method for verifying calibrated extrinsic parameter values of a camera in any one of the technical solutions of the above method for verifying calibrated extrinsic parameter values of a camera.

In a third aspect, a computer-readable storage medium is provided. A plurality of pieces of program code are stored in the computer-readable storage medium, and the program code is adapted to be loaded and run by a processor to perform the method for verifying calibrated extrinsic parameter values of a camera in any one of the technical solutions of the above method for verifying calibrated extrinsic parameter values of a camera.

The above one or more technical solutions of the disclosure have at least one or more of the following beneficial effects:

In the technical solutions for implementing the disclosure, a plurality of perturbations are applied to calibrated extrinsic parameter values of a camera, at least one perturbed extrinsic parameter value is obtained based on any one of the perturbations applied, first reprojection errors respectively corresponding to the calibrated extrinsic parameter values and the perturbed extrinsic parameter value are calculated, and whether the calibrated extrinsic parameter values are optimal values is verified based on a comparison between an extrinsic parameter value corresponding to a minimum first reprojection error in the first reprojection errors and the calibrated extrinsic parameter values. Through the above implementation, the convergence of iterative interference may be checked, and whether the calibrated extrinsic parameter values of the camera are optimal values may be verified, which has the characteristics of high accuracy and high applicability.

### Brief Description of the Drawings

The disclosed content of the disclosure will become more readily understood with reference to the accompanying drawings. Those skilled in the art readily understand that these accompanying drawings are merely for illustrative purposes and are not intended to limit the scope of protection of the disclosure. In the drawings:
FIG. 1 is a schematic flowchart of main steps of a method for verifying calibrated extrinsic parameter values of a camera according to an embodiment of the disclosure;
FIG. 2 is a schematic diagram of reprojection according to an embodiment of the disclosure;
FIG. 3 is a schematic diagram of distribution of first reprojection errors in the first iteration according to an embodiment of the disclosure;
FIG. 4 is a schematic diagram of distribution of first reprojection errors in the fifth iteration according to an embodiment of the disclosure;
FIG. 5 is a schematic flowchart of main steps of a method for verifying calibrated extrinsic parameter values of a camera according to an embodiment of the disclosure;
FIG. 6 is a schematic flowchart of main steps of a method for verifying calibrated extrinsic parameter values of a multi-lens camera according to an embodiment of the disclosure;
FIG. 7 is a schematic diagram of reprojection of a binocular camera according to an embodiment of the disclosure; and
FIG. 8 is a schematic diagram of a main structure of an embodiment of an electronic device according to the disclosure.

### List of reference signs:

801: processor; 802: storage apparatus.

### Detailed Description of Embodiments

Some implementations of the disclosure are described below with reference to the accompanying drawings. Those skilled in the art should understand that these implementations are only used to explain the technical principles of the disclosure, and are not intended to limit the scope of protection of the disclosure.

In the description of the disclosure, a "module" or "processor" may include hardware, software, or a combination thereof. A module may include a hardware circuit, various suitable sensors, a communication port, and a memory, or may include a software part, for example, program code, or may be a combination of software and hardware. The processor may be a central processing unit, a microprocessor, a graphics processing unit, a digital signal processor, or any other suitable processor. The processor has a data and/or signal processing function. The processor may be implemented in software, hardware, or a combination thereof. A non-transitory computer-readable storage medium includes any suitable medium that may store program codes, for example, a magnetic disk, a hard disk, an optical disc, a flash memory, a read-only memory, or a random access memory. The term "A and/or B" indicates all possible combinations of A and B, for example, only A, only B, or A and B. The term "at least one of A or B" or "at least one of A and B" has a meaning similar to "A and/or B" and may include only A, only B, or A and B. The terms "a/an" and "this" in the singular form may also include the plural form.

Some terms in the disclosure are explained herein first.

Camera calibration: In an image measurement process and machine vision applications, to determine a relationship between a three-dimensional geometric position of a point on a surface of a spatial object and a corresponding point of the point in an image, a geometric model for camera imaging must be established, and these geometric model parameters are camera parameters. Under most conditions, these parameters must be obtained through experiments and calculations. This process of solving parameters is called camera calibration, also known as video camera calibration. Coordinate systems involved in the camera calibration process include a world coordinate system, a camera coordinate system, an image coordinate system, and a pixel coordinate system.

World coordinate system: During movement of a robot or a camera, there is a need to know its position. Therefore, a world coordinate system needs to be set and considered fixed as a reference coordinate system, to describe a position of any point P (x_{w}, y_{w}, z_{w}) in the world.

Camera coordinate system: It is a coordinate system for movement of a camera or a robot, calculated through transformation of a world coordinate system (a rotation matrix R and a translation matrix T). Therefore, it mainly transforms a point P (x_{w}, y_{w}, y_{w}) described in the world coordinate system to a point P (x_{c}, y_{c}, z_{c}) under the camera coordinate system. This makes it easier to calculate coordinates in an image coordinate system, with the optical center as the origin.

Image coordinate system: It describes a position of an imaging point P (x, y) in the image coordinate system.

Pixel coordinate system: An image is composed of pixels, which are points. The image is composed of small pixels P (u, v), which is the pixel coordinate system, and its unit is pixel.

Intrinsic camera parameters: also known as an intrinsic camera parameter matrix, and are parameters related to own characteristics of a camera. They generally include focal lengths of the camera in the x-axis and the y-axis in an imaging plane, coordinate axis tilt parameters of the imaging plane of the camera, a pixel size, etc.

Extrinsic camera parameter values: also known as an extrinsic camera parameter matrix. Coordinate systems involved in an imaging process include a world coordinate system, a camera coordinate system, an image coordinate system, and a pixel coordinate system in sequence. The world coordinate system and the camera coordinate system are three-dimensional rectangular coordinate systems, while the image coordinate system and the pixel coordinate system are two-dimensional rectangular coordinate systems. The extrinsic camera parameter values are parameters under the world coordinate system, such as a position and a rotation direction of a camera, etc., which are used for coordinate system transformation between the image coordinate system and the world coordinate system. Therefore, the extrinsic camera parameter values include a rotation matrix R and a translation matrix T. The rotation matrix describes a direction of the coordinate axes of the world coordinate system relative to the coordinate axes of a video camera; and the translation matrix describes a position of an origin of space in the camera coordinate system.

PNP: Perspective-N-Point, is a method for solving correspondences between points from three dimensions to two dimensions. It describes how to estimate and calculate extrinsic parameters of a camera when N three-dimensional spatial points and their positions are known. If three-dimensional positions of feature points in one of two images are consistent, at least three pairs of points (and at least one additional verification point to verify the results) are needed to calculate movement of the camera.

Reprojection error: refers to a difference between a projection of a real three-dimensional spatial point on an image plane (that is, an actual pixel on an image) and a reprojection (that is, a theoretical pixel calculated). In the disclosure, it represents a variance of Euclidean distances between all actual pixels and theoretical pixels.

As described in Background Art, cameras are one of the most important sensors for a vehicle to achieve autonomous driving. Therefore, calibration of cameras in relation to their installation positions on the vehicle (that is, extrinsic parameters R/T) is of utmost importance. Accurate extrinsic parameters can improve the accuracy of algorithms such as perception and fusion, and also provide effective initial value guarantee for secondary development of the backend.

Using a single method to check calibrated parameters of a camera has strong limitations, low applicability, and the verification results are not comprehensive and accurate. It does not consider the verification of iterative interference, and cannot check whether calibrated extrinsic parameter values have reached optimal values. To solve the above problems, the disclosure provides a method for verifying calibrated extrinsic parameter values of a camera, a device, and a medium.

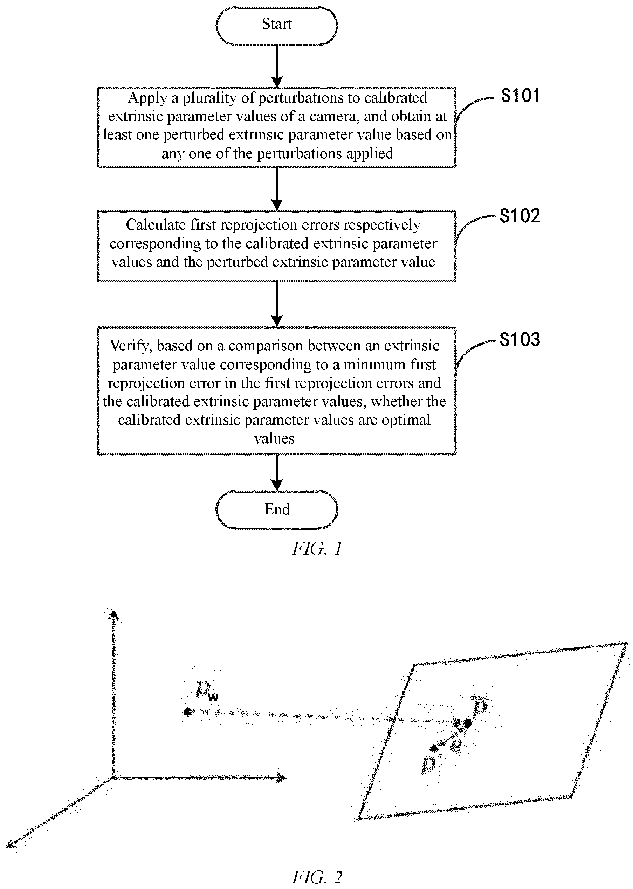

Referring to FIG. 1, FIG. 1 is a schematic flowchart of main steps of a method for verifying calibrated extrinsic parameter values of a camera according to an embodiment of the disclosure. As shown in FIG. 1, the method for verifying calibrated extrinsic parameter values of a camera in this embodiment of the disclosure mainly includes the following step S 101 to step S103.

Step S101: Apply a plurality of perturbations to the calibrated extrinsic parameter values of the camera, and obtain at least one perturbed extrinsic parameter value based on any one of the perturbations applied.

Step S102: Calculate first reprojection errors respectively corresponding to the calibrated extrinsic parameter values and the perturbed extrinsic parameter value.

Step S103: Verify, based on a comparison between an extrinsic parameter value corresponding to a minimum first reprojection error in the first reprojection errors and the calibrated extrinsic parameter values, whether the calibrated extrinsic parameter values are optimal values.

Based on the method described in the above steps S101 to S103, the convergence of iterative interference may be checked, and whether the calibrated extrinsic parameter values of the camera are optimal values may be verified, which has the characteristics of high accuracy and high applicability.

In some implementations, before the above step S 101 is performed, the method further includes:
obtaining the calibrated extrinsic parameter values of the camera based on three-dimensional coordinate points under a world coordinate system, corresponding pixels under an image coordinate system, and intrinsic camera parameters.

Specifically, a PNP algorithm may be used to calculate the calibrated extrinsic parameter values of the camera. Main calculation methods include direct linear transformation (DLT), P3P, EPNP, bundle adjustment (BA), etc., and these methods are further described below.
(1) DLT: It constructs an equation about extrinsic camera parameter values based on three-dimensional coordinate points under the world coordinate system, corresponding pixels under the image coordinate system, and intrinsic camera parameters. Based on world coordinates of N points and normalized plane coordinates of the camera, and with the depth eliminated, 2N constraint equations are obtained, and then the SVD algorithm is used to solve the equations to obtain calibrated extrinsic parameter values of the camera.
   SVD is an abbreviation of Singular Value Decomposition, which is a widely applied algorithm in the field of machine learning. It can not only be used for feature decomposition in dimensionality reduction algorithms, but also can be used in recommendation systems, and natural language processing and other fields.
(2) P3P: Based on world coordinates of three points and normalized plane coordinates of a camera, the cosine theorem geometric relationship is used to obtain camera coordinates of the three points. Then, this is transformed into solving three-dimensional point-to-three-dimensional point extrinsic parameter values, and the ICP algorithm is used for solution.
   ICP is an abbreviation of Iterative Closest Point. It is mainly used for precise stitching of depth images in computer vision. It achieves precise stitching by continuously minimizing correspondence points between source data and target data through iteration. There are already many variants, and the main focus is on how to efficiently and robustly achieve better stitching effects.
(3) EPNP: Four control points are selected based on world coordinates of N points and a weighting coefficient is calculated. Through a camera model and pixel coordinates of the N points, coordinates of the four control points under the camera coordinate system are solved, and then coordinates of the N points under the camera coordinate system are further obtained. This issue is transformed into solving three-dimensional point-to-three-dimensional point extrinsic parameter values, and then the ICP is used for solution.
(4) BA: A nonlinear optimization issue is constructed based on a reprojection error of a corresponding point. A derivative of the error with respect to a pose is obtained using Lie algebra, to guide an optimization direction. An extrinsic parameter value that minimizes a sum of reprojection errors of all corresponding points is iteratively obtained.

Lie algebra is a type of important non-associative algebra. It is a mathematical concept introduced by a Norwegian mathematician Sophus Lie during his study of continuous transformation groups. It is closely related to the study of Lie groups.

The above examples of calibration methods for extrinsic camera parameter values are merely schematically illustrative. In practical applications, those skilled in the art may select the above methods or other methods according to specific scenarios, which is not limited here.

Furthermore, the calculated calibrated extrinsic parameter values of the camera include a rotation matrix R and a translation matrix T, where the rotation matrix R includes three values, which are respectively rotation angles in the directions of the three coordinate axes of x, y, and z in the camera coordinate system, and the translation matrix T also includes three values, which are respectively translation distances in the directions of the three coordinate axes of x, y, and z in the camera coordinate system.

The above steps S101 to S103 are further described below.

In some implementations, the PNP iterative algorithm may be used to verify the calibrated extrinsic camera parameter values.

Further, in some implementations of the above step S101, the following step S 1011 and step S 1012 are mainly included.

Step S1011: Set a number of iterations for applying the perturbations.

When the calibrated extrinsic parameter values of the camera are verified, the number of iterations for applying the perturbations may be set to 4-6, which is not limited here.

Step S 1012: In any one of the iterations, apply at least one perturbation to the calibrated extrinsic parameter values to obtain at least one corresponding perturbed extrinsic parameter value,
where a perturbation step size of perturbations applied in an iteration is less than a perturbation step size of perturbations applied in a previous iteration.

In some implementations, the calibrated extrinsic parameter values may be set to x₀, and perturbations may be applied to the calibrated extrinsic parameter value x₀, where perturbations applied in one iteration include six values, which correspond to three values of the rotation matrix R and three values of the translation matrix T, respectively.

For example, in the first iteration, a perturbation value of 0.001° is applied to each of the three values of the rotation matrix R, a perturbation value of 0.001 m is applied to each of the three values of the translation matrix T, and this perturbation value is used as a step size, so that the calibrated extrinsic parameter value x₀ is selected to be increased or reduced by a corresponding step size, to obtain perturbed extrinsic parameter values x₁, x₂, x₃, x₄, x₋₁, x₋₂, x₋₃, and x₋₄. where x₁ is a perturbed value obtained by increasing x₀ by one step size; x₂ is a perturbed value obtained by increasing x₀ by two step sizes. x₃ is a perturbed value obtained by increasing x₀ by three step sizes; x₄ is a perturbed value obtained by increasing x₀ by four step sizes; x₋₁ is a perturbed value obtained by reducing x₀ by one step size; x₋₂ is a perturbed value obtained by reducing x₀ by two step sizes; x₋₃ is a perturbed value obtained by reducing x₀ by three step sizes; and x₋₄ is a perturbed value obtained by reducing x₀ by four step sizes.

Further, in the second iteration, a perturbation step size is reduced. For example, a perturbation value of 0.0005° is applied to each of the three values of the rotation matrix R, a perturbation value of 0.0005 m is applied to each of the three values of the translation matrix T, and this perturbation value is used as a step size, so that the calibrated extrinsic parameter value x₀ is selected to be increased or reduced by a corresponding step size, to obtain perturbed extrinsic parameter values. In the third iteration, a perturbation step size is further reduced. For example, a perturbation value of 0.00025° is applied to each of the three values of the rotation matrix R, a perturbation value of 0.00025 m is applied to each of the three values of the translation matrix T, and this perturbation value is used as a step size, so that the calibrated extrinsic parameter value x₀ is selected to be increased or reduced by a corresponding step size, to obtain perturbed extrinsic parameter values, and so on, until the set number of iterations is reached.

It should be noted that the perturbation value to be applied to each of the three values of the rotation matrix R may be the same as or different from that to be applied to each of the three values of the translation matrix T. The above examples of perturbed extrinsic parameter values are merely schematically illustrative. In practical applications, those skilled in the art may apply perturbation values according to specific situations to obtain corresponding perturbed extrinsic parameter values, which is not limited here.

Step S101 is further described above, and step S102 is further described below.

In some implementations of the above step S102, when the first reprojection errors are calculated using the PNP iteration algorithm, three-dimensional coordinate points under the world coordinate system, observed values of corresponding pixels under the image coordinate system, the calibrated extrinsic camera parameter values, and intrinsic camera parameter values that participate in the PNP iterations need to be inputted.

Referring to FIG. 2, FIG. 2 is a schematic diagram of a first reprojection according to an embodiment of the disclosure. As shown in FIG. 2, a point P_{w} (x_{w}, y_{w}, z_{w}) is a three-dimensional coordinate point under the world coordinate system, a point P_{c} (x_{c}, y_{c}, z_{c}) is a three-dimensional coordinate point of the point P_{w} under the camera coordinate system, a point P' is an observed value (that is, an actual value) of a corresponding pixel of the point P_{w} under the image coordinate system, a point P is a calculated value (that is, a theoretical value) of a corresponding pixel of the point P_{w} under the image coordinate system, and further, calculating a first reprojection error mainly includes the following step S1021 to step S1023.

Step S1021: Map the three-dimensional coordinate point under the world coordinate system to the image coordinate system based on the calibrated extrinsic parameter values of the camera, to obtain a calculated value of a corresponding pixel.

First, the three-dimensional coordinate point P_{w} (x_{w}, y_{w}, z_{w}) under the world coordinate system is transformed, based on the extrinsic parameter matrices R and T, to the three-dimensional coordinate point P_{c} (x_{c}, y_{c}, z_{c}) under the camera coordinate system, and the formula is as follows:
$\left[\begin{matrix}{x}_{c} \\ {y}_{c} \\ {z}_{c}\end{matrix}\right] = R ∗ \left[\begin{matrix}{x}_{w} \\ {y}_{w} \\ {z}_{w}\end{matrix}\right] + T = \left[\begin{matrix}R & T \\ 0 & 1\end{matrix}\right] ∗ \left[\begin{matrix}{x}_{w} \\ {y}_{w} \\ {z}_{w} \\ 1\end{matrix}\right]$

Further, The point P_{c} (x_{c}, y_{c}, z_{c}) is transformed, based on an intrinsic parameter matrix Kc, to a calculated value (that is, a theoretical value) *P̅* (x, y) of a pixel corresponding to the point P_{c}, and the formula is as follows:
${K}_{c} * \left[\begin{matrix}x \\ y \\ 1\end{matrix}\right] = \left[\begin{matrix}f & 0 & 0 & 0 \\ 0 & f & 0 & 0 \\ 0 & 0 & 1 & 0\end{matrix}\right] ∗ \left[\begin{matrix}{x}_{c} \\ {y}_{c} \\ {z}_{c} \\ 1\end{matrix}\right]$

Step S1022: Calculate a Euclidean distance between an observed value of the pixel and the calculated value.

In other words, a Euclidean distance e between the actual value point P' and the calculated value point *P̅* under the image coordinate system is calculated, and the formula is as follows:
$e = {\left({\overline{p}}_{x}-p{′}_{x}\right)}^{2} + {\left({\overline{p}}_{y}-p{′}_{y}\right)}^{2}$

Step S1023: Obtain a first reprojection error based on the Euclidean distance.

In some implementations, Euclidean distances e between actual value points and theoretical value points of all points under the image coordinate system may be first obtained based on the above formula, and further, a variance or standard deviation of the Euclidean distances of all points can be calculated to obtain a value of the first reprojection error, which may be represented by error.

In some implementations, the first reprojection errors respectively corresponding to the calibrated extrinsic parameter value x₀ and the perturbed extrinsic parameter values x₁, x₂, x₃, x₄, x₋₁, x₋₂, x₋₃, and x₋₄ can be calculated using the method in the above step S1021 to step S1023.

Step S102 is further described above, and step S 103 is further described below.

In some implementations of the above step S103, whether the calibrated extrinsic parameter values are optimal values may be verified based on a comparison between an extrinsic parameter value corresponding to a minimum first reprojection error in the first reprojection errors and the calibrated extrinsic parameter values, according to the following step S1031 and step S1032.

Step S1031: Compare first reprojection errors corresponding to a current iteration, to obtain a minimum first reprojection error in the first reprojection errors.

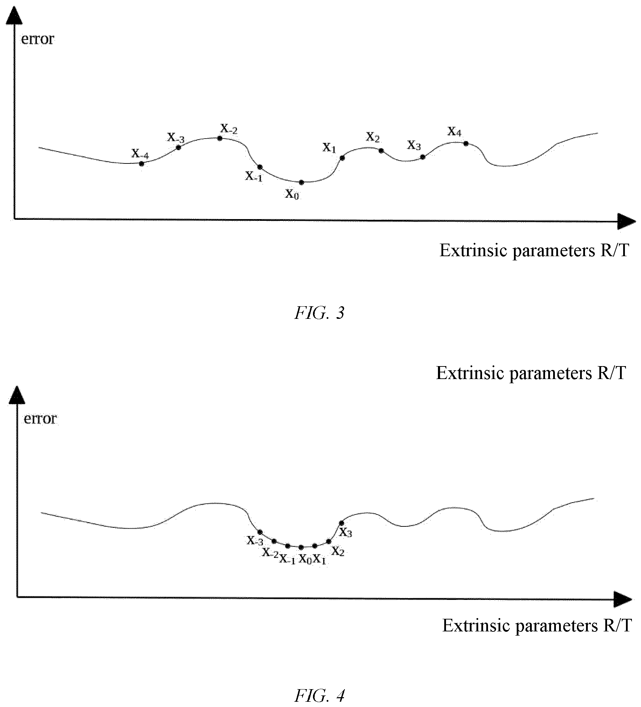

In some implementations, referring to FIG. 3, FIG. 3 is a schematic diagram of distribution of first reprojection errors in the first iteration according to an embodiment of the disclosure. As shown in FIG. 3, in the first reprojection errors, respectively corresponding to the calibrated extrinsic parameter value x₀ and the perturbed extrinsic parameter values x₁, x₂, x₃, x₄, x₋₁, x₋₂, x₋₃, and x₋₄, calculated using the PNP iterative algorithm, the first reprojection error corresponding to the calibrated extrinsic parameter value x₀ is the minimum first reprojection error.

Step S1032: Compare whether an extrinsic parameter value corresponding to the minimum first reprojection error is equal to the calibrated extrinsic parameter values.

In some implementations, if the extrinsic parameter value corresponding to the minimum first reprojection error in the current iteration is not equal to the calibrated extrinsic parameter values, the calibrated extrinsic parameter values are verified as not optimal values.

For example, if the first reprojection error corresponding to x₋₂ in the second iteration is the minimum first reprojection error, the calibrated extrinsic parameter values are verified as not optimal values, and the PNP iterative calculation is stopped.

In some other implementations, if the extrinsic parameter value corresponding to the minimum first reprojection error in the current iteration is equal to the calibrated extrinsic parameter values, step S 1031 and step S 1032 are repeated based on first reprojection errors obtained in a next iteration, until the number of iterations is reached.

For example, the number of iterations is set to 5. In the first iteration, the first reprojection error corresponding to x₀ is the minimum first reprojection error. In this case, the above step S 1031 and step S 1032 are repeated until the fifth iteration is completed.

Further, in some implementations, if the extrinsic parameter value corresponding to the minimum first reprojection error in all the iterations of the number of iterations is equal to the calibrated extrinsic parameter values, the calibrated extrinsic parameter values are verified as optimal values.

Referring to FIG. 4, FIG. 4 is a schematic diagram of distribution of first reprojection errors in the fifth iteration according to an embodiment of the disclosure. As shown in FIG. 4, in the first reprojection errors respectively corresponding to the calibrated extrinsic parameter value x₀ and the perturbed extrinsic parameter values x₁, x₂, x₃, x₄, x₋₁, x₋₂, x₋₃, and x₋₄, the first reprojection error corresponding to the calibrated extrinsic parameter value x₀ is still the minimum first reprojection error. In this case, the calibrated extrinsic parameter values are verified as optimal extrinsic parameter values.

The above is a description of step S103.

During the PNP iterations, the first reprojection error calculated may not necessarily reach a minimum value. It may be a local minimum value, or a maximum number of iterations is reached, but the first reprojection error has not reached a minimum value. The method for verifying calibrated extrinsic parameter values of a camera provided in the disclosure may check whether the first reprojection error is the minimum value, and further verify whether the calibrated extrinsic parameter values of the camera are optimal values.

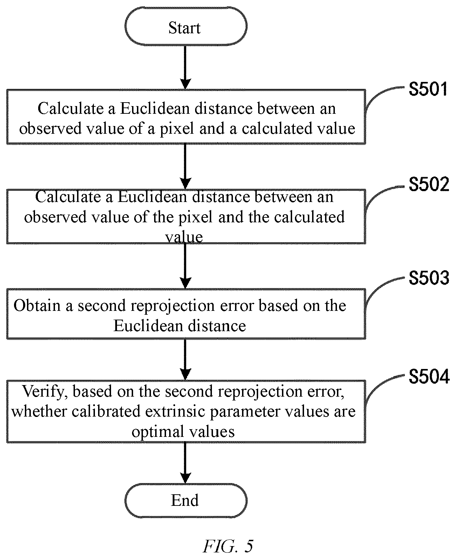

Further, the method provided in the disclosure may also verify the calibrated extrinsic parameter values of the camera by calculating a second reprojection error. Referring to FIG. 5, FIG. 5 is a schematic flowchart of main steps of a method for verifying calibrated extrinsic parameter values of a camera according to an embodiment of the disclosure, which is used for verifying extrinsic parameter values of the three-dimensional points participating in the PNP iterations. As shown in FIG. 5, the method for verifying calibrated extrinsic parameter values of a camera in this embodiment of the disclosure mainly includes the following step S501 to step S504.

Step S501: Map the three-dimensional coordinate point under the world coordinate system to the image coordinate system based on the calibrated extrinsic parameter values, to obtain a calculated value of a corresponding pixel.

In some implementations, the three-dimensional coordinate point P_{w} (x_{w}, y_{w}, z_{w}) under the world coordinate system participating in the PNP iterations may be transformed, based on the extrinsic parameter matrices R and T, to the three-dimensional coordinate point P_{c} (x_{c}, y_{c}, z_{c}) under the camera coordinate system, and the formula is as follows:
$\left[\begin{matrix}{x}_{c} \\ {y}_{c} \\ {z}_{c}\end{matrix}\right] = R * \left[\begin{matrix}{x}_{w} \\ {y}_{w} \\ {z}_{w}\end{matrix}\right] + T = \left[\begin{matrix}R & T \\ 0 & 1\end{matrix}\right] * \left[\begin{matrix}{x}_{w} \\ {y}_{w} \\ {z}_{w} \\ 1\end{matrix}\right]$

Further, The point P_{c} (x_{c}, y_{c}, z_{c}) is transformed, based on an intrinsic parameter matrix Kc, to a calculated value (that is, a theoretical value) *P̅* (x, y) of a pixel corresponding to the point P_{c}, and the formula is as follows:
${K}_{c} * \left[\begin{matrix}x \\ y \\ 1\end{matrix}\right] = \left[\begin{matrix}f & 0 & 0 & 0 \\ 0 & f & 0 & 0 \\ 0 & 0 & 1 & 0\end{matrix}\right] ∗ \left[\begin{matrix}{x}_{c} \\ {y}_{c} \\ {z}_{c} \\ 1\end{matrix}\right]$

Step S502: Calculate a Euclidean distance between an observed value of the pixel and the calculated value.

In some implementations, a Euclidean distance e between the actual value point P' and the calculated value point *P̅* under the image coordinate system may be calculated according to the following formula:
$e = {\left({\overline{p}}_{x}-p{′}_{x}\right)}^{2} + {\left({\overline{p}}_{y}-p{′}_{y}\right)}^{2}$

Step S503: Obtain a second reprojection error based on the Euclidean distance.

In some implementations, Euclidean distances e between actual value points and theoretical value points of all points under the image coordinate system may be first obtained based on the above formula, and further, a variance or standard deviation of the Euclidean distances of all points is calculated to obtain the second reprojection error.

Step S504: Verify, based on the second reprojection error, whether the calibrated extrinsic parameter values are optimal values.

According to the optimization criteria, the smaller the second reprojection error, the higher the accuracy of the calibrated extrinsic parameter values. For example, for a camera with a resolution of 752 times 480, the second reprojection error should be less than 0.2 pixel. When the calculated second reprojection error is less than 0.2 pixel, the extrinsic camera parameter values are verified as optimal values. In practical applications, those skilled in the art may set a threshold of the second reprojection error according to specific scenarios, which is not limited here.

Further, a second reprojection error of a three-dimensional point not participating in the PNP iterations may be calculated to verify whether the calibrated extrinsic parameter values of the camera are only applicable to the three-dimensional point participating in the PNP iterations.

Specifically, the following steps are included:
(1) mapping a three-dimensional coordinate point under the world coordinate system not participating in the PNP iterations to the image coordinate system based on the calibrated extrinsic parameter values of the camera, to obtain a calculated value of a corresponding pixel;
(2) calculating a Euclidean distance between an observed value of the pixel not participating in the PNP iterations and the calculated value;
(3) obtaining a second reprojection error based on the Euclidean distance; and
(4) verifying, based on the second reprojection error, whether the calibrated extrinsic parameter values are optimal values.

The formulas and specific calculation methods involved in this method are detailed in the above step S501 to step S504 and will not be repeated here.

Based on the above method, the second reprojection error of the three-dimensional point not participating in the PNP iterations may be calculated to verify whether the calibrated extrinsic parameter values of the camera are only applicable to the three-dimensional point participating in the PNP iterations.

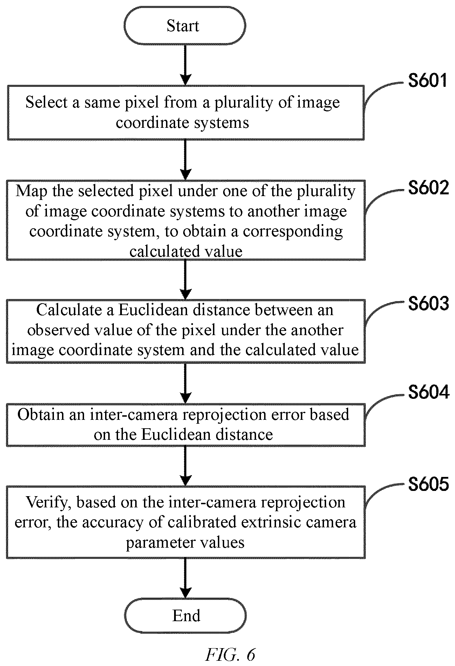

Further, the method provided in the disclosure may also calculate an inter-camera reprojection error to verify calibrated extrinsic parameter values of a multi-lens camera. Referring to FIG. 6, FIG. 6 is a schematic flowchart of main steps of a method for verifying calibrated extrinsic parameter values of a multi-lens camera according to an embodiment of the disclosure. As shown in FIG. 6, the method in this embodiment of the disclosure mainly includes the following step S601 to step S605.

Step S601: Select a same pixel from a plurality of image coordinate systems.

In some implementations, a same pixel under image coordinate systems of a left camera and a right camera of a binocular camera may be selected, or a same pixel under a plurality of image coordinate systems corresponding to a multi-lens camera may be selected, which is not limited here.

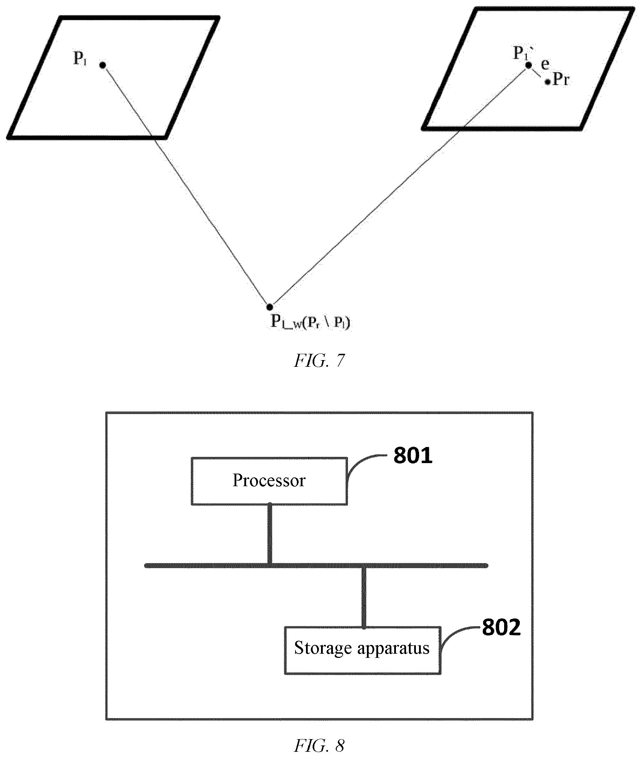

Specifically, a binocular camera is used as an example. Referring to FIG. 7, FIG. 7 is a schematic diagram of reprojection of a binocular camera according to an embodiment of the disclosure. As shown in FIG. 7, a point Pₗ (uₗ, vₗ) is an observed pixel under an image coordinate system of a left camera, a point Pᵣ (uᵣ, vᵣ) is an observed pixel (that is, an actual value), the same as the point Pₗ, under an image coordinate system of a right camera, a point Pₗ (xi, yₗ, zₗ) is three-dimensional coordinates under a camera coordinate system of the left camera, a point P_{l_w} (x_{l_w}, y_{l_w}, z_{l_w}) is three-dimensional coordinates of the point Pₗ under the world coordinate system, a point P_{l_r} is three-dimensional coordinates of the point Pₗ under a camera coordinate system of the right camera, and a point pₗ' (uₗ', vₗ') is a calculated value (that is, a theoretical value) of a pixel corresponding to the point Pₗ of the left camera under the image coordinate system.

Step S602: Map the selected pixel under any one of the plurality of image coordinate systems to another image coordinate system, to obtain a corresponding calculated value.

In some implementations, in a first step, the point Pₗ (uₗ, vₗ) may be transformed, based on an intrinsic parameter matrix Kₗ of the left camera, to the three-dimensional coordinate point Pₗ (xi, yi, zₗ) under the camera coordinate system, and the formula is as follows:
$\left[\begin{matrix}{x}_{l} \\ {y}_{l} \\ {z}_{l}\end{matrix}\right] = {{K}_{l}}^{- 1} ∗ \left[\begin{matrix}{u}_{l} \\ {ν}_{l} \\ 1\end{matrix}\right]$

In a second step, the point Pₗ (xₗ, yi, zₗ) is transformed, based on extrinsic parameter matrices Rₗ and Ti of the left camera, to the three-dimensional coordinate point P_{l_w} (x_{l_w}, y_{l_w}, z_{l_w}) under the world coordinate system, and the formula is as follows:
$\left[\begin{matrix}{x}_{l _ w} \\ {y}_{l _ w} \\ {z}_{l _ w}\end{matrix}\right] = {R}_{l} * \left[\begin{matrix}{x}_{l} \\ {y}_{l} \\ {z}_{l}\end{matrix}\right] + {T}_{l}$

In a third step, the point P_{l_w} (x_{l_w}, y_{l_w}, z_{l_w}) is transformed, based on extrinsic parameter matrices Rr and Tr of the right camera, to the three-dimensional coordinate point P_{l_r} (x_{l_r}, y_{l_r}, z_{l_r}) under the camera coordinate system of the right camera, and the formula is as follows:
$\left[\begin{matrix}{x}_{l _ r} \\ {y}_{l _ r} \\ {z}_{l _ r}\end{matrix}\right] = {R}_{r} * \left[\begin{matrix}{x}_{l _ w} \\ {y}_{l _ w} \\ {z}_{l _ w}\end{matrix}\right] + {T}_{r}$

In a fourth step, the point P_{l_r} (x_{l_r}, y_{l_r}, z_{l_r}) is transformed, based on an intrinsic parameter matrix Kr of the right camera, to a calculated value (that is, a theoretical value) pₗ' (uₗ', vₗ') of a pixel under the image coordinate system of the right camera, and the formula is as follows:
$\left[\begin{matrix}{u}_{l} ′ \\ {ν}_{l} ′ \\ 1\end{matrix}\right] = {K}_{r} ∗ \left[\begin{matrix}{x}_{l _ r} \\ {y}_{l _ r} \\ {z}_{l _ r}\end{matrix}\right]$

Step S603: Calculate a Euclidean distance between an observed value of the pixel under the another image coordinate system and the calculated value.

In some implementations, a Euclidean distance e between the actual value point Pᵣ and the calculated value point pₗ' under the image coordinate system of the right camera may be calculated according to the following formula:
$e = {\left({p}_{l ′ x}-{p}_{rx}\right)}^{2} + {\left({p}_{l ′ y}-{p}_{ry}\right)}^{2}$

Step S604: Obtain an inter-camera reprojection error based on the Euclidean distance.

In some implementations, Euclidean distances e between actual value points and theoretical value points of all points under the image coordinate system of the right camera may be first obtained according to the above formula, and further, a variance or standard deviation of the Euclidean distances of all points may be calculated to obtain a value of the inter-camera reprojection error, which is recorded as a third reprojection error.

Step S605: Verify, based on the inter-camera reprojection error, the accuracy of the calibrated extrinsic camera parameter values.

According to the optimization criteria, the smaller the third reprojection error, the higher the accuracy of the calibrated extrinsic parameter values. In practical applications, those skilled in the art may set a threshold of the third reprojection error according to specific scenarios, and consider the calibrated extrinsic parameter values as optimal values when the third reprojection error meets the threshold.

The above is a description of the method for verifying calibrated extrinsic parameter values of a multi-lens camera.

Further, in some implementations, the method for verifying calibrated extrinsic parameter values of a camera provided in the disclosure further includes:
comparing the calibrated extrinsic parameter values of the camera with a design value to check a deviation degree of the camera.

Specifically, the design value of the extrinsic parameters of the camera may be inputted into a program and compared with the calibrated extrinsic parameter values of the camera to determine whether the camera is severely deviated, and when the camera is severely deviated, appropriate adjustments may be made to avoid affecting perception functions of the camera.

Through the method for verifying calibrated extrinsic parameter values of a camera provided in the disclosure, the accuracy of the calibrated extrinsic parameter values may be more comprehensively checked, and the convergence of iterative interference may be verified, which has the characteristics of high accuracy and high applicability.

It should be noted that, although the steps are described in a specific order in the above embodiments, those skilled in the art may understand that in order to implement the effects of the disclosure, different steps are not necessarily performed in such an order, but may be performed simultaneously (in parallel) or in other orders, and these changes shall all fall within the scope of protection of the disclosure.

Those skilled in the art can understand that all or some of the procedures in the method of the above embodiment of the disclosure may also be implemented by a computer program instructing relevant hardware. The computer program may be stored in a computer-readable storage medium, and when the computer program is executed by a processor, the steps of the above method embodiments may be implemented. The computer program includes computer program code, which may be in a source code form, an object code form, an executable file form, some intermediate forms, or the like. The computer-readable storage medium may include: any entity or apparatus that can carry the computer program code, a medium, a USB flash drive, a removable hard disk, a magnetic disk, an optical disc, a computer memory, a read-only memory, a random access memory, an electric carrier signal, a telecommunications signal, and a software distribution medium.

Further, the disclosure further provides an electronic device. Referring to FIG. 8, FIG. 8 is a schematic diagram of a main structure of an embodiment of an electronic device according to the disclosure. As shown in FIG. 8, the electronic device in this embodiment of the disclosure mainly includes a processor 801 and a storage apparatus 802. The storage apparatus 802 may be configured to store a program for performing the method for verifying calibrated extrinsic parameter values of a camera in the above method embodiments. The processor 801 may be configured to execute the program in the storage apparatus 802, where the program includes, but is not limited to, a program for performing the method for verifying calibrated extrinsic parameter values of a camera in the above method embodiments. For ease of description, only parts related to the embodiments of the disclosure are shown. For specific technical details that are not disclosed, reference may be made to the method part of the embodiments of the disclosure.

In some possible implementations of the disclosure, the electronic device may include a plurality of processors 801 and a plurality of storage apparatuses 802. The program for performing the method for verifying calibrated extrinsic parameter values of a camera in the above method embodiments may be divided into a plurality of segments of subprogram, and each segment of subprogram may be loaded and run by the processor 801 to perform a different step of the method for verifying calibrated extrinsic parameter values of a camera in the above method embodiments. Specifically, each segment of subprogram may be stored in a different storage apparatus 802, and each processor 801 may be configured to execute programs in one or more storage apparatuses 802 to jointly implement the method for verifying calibrated extrinsic parameter values of a camera in the above method embodiments. In other words, each processor 801 performs different steps of the method for verifying calibrated extrinsic parameter values of a camera in the above method embodiments, to jointly implement the method for verifying calibrated extrinsic parameter values of a camera in the above method embodiments.

The plurality of processors 801 may be processors deployed on a same device. For example, the above electronic device may be a high-performance device composed of a plurality of processors. The plurality of processors 801 may be processors configured on the high-performance device. In addition, the plurality of processors 801 may alternatively be processors deployed on different devices. For example, the above electronic device may be a server cluster, and the plurality of processors 801 may be processors on different servers in the server cluster. The above electronic device may be a driving device cluster, and the plurality of processors 801 may be processors on different driving devices in the driving device cluster.

Further, the disclosure further provides a computer-readable storage medium. In an embodiment of the computer-readable storage medium according to the disclosure, the computer-readable storage medium may be configured to store a program for performing the method for verifying calibrated extrinsic parameter values of a camera in the above method embodiments, and the program may be loaded and run by a processor to implement the above method for verifying calibrated extrinsic parameter values of a camera. For ease of description, only parts related to the embodiments of the disclosure are shown. For specific technical details that are not disclosed, reference may be made to the method part of the embodiments of the disclosure. The computer-readable storage medium may be a storage apparatus formed by various electronic devices. Optionally, the computer-readable storage medium in the embodiment of the disclosure is a non-transitory computer-readable storage medium.

Heretofore, the technical solutions of the disclosure have been described with reference to an implementation shown in the accompanying drawings. However, it would have been readily understood by those skilled in the art that the scope of protection of the disclosure is obviously not limited to these specific implementations. The invention is defined by the appended claims.

## Claims

1. A computer-implemented method for verifying calibrated extrinsic parameter values of a camera, the method comprising:
setting a number of iterations for applying perturbations,
applying (S101) a plurality of perturbations to the calibrated extrinsic parameter values of the camera, and obtaining at least one perturbed extrinsic parameter value based on any one of the perturbations applied;
calculating (S102) first reprojection errors respectively corresponding to the calibrated extrinsic parameter values and the at least one perturbed extrinsic parameter value; and
verifying (S103), based on a comparison between an extrinsic parameter value corresponding to a minimum first reprojection error in the first reprojection errors and the calibrated extrinsic parameter values, whether the calibrated extrinsic parameter values are optimal values, comprising:
S30: comparing first reprojection errors corresponding to a current iteration, to obtain a minimum first reprojection error in the first reprojection errors;
S32: comparing whether an extrinsic parameter value corresponding to the minimum first reprojection error is equal to the calibrated extrinsic parameter values;
S34: if the extrinsic parameter value corresponding to the minimum first reprojection error in the current iteration is not equal to the calibrated extrinsic parameter values, verifying the calibrated extrinsic parameter values as not optimal values.

2. The method for verifying calibrated extrinsic parameter values of a camera according to claim 1, wherein the applying a plurality of perturbations to the calibrated extrinsic parameter values of the camera, and obtaining at least one perturbed extrinsic parameter value based on any one of the perturbations applied comprises:
in any one of the iterations, applying at least one perturbation to the calibrated extrinsic parameter values to obtain at least one corresponding perturbed extrinsic parameter value, wherein a perturbation step size of perturbations applied in an iteration is less than a perturbation step size of perturbations applied in a previous iteration.

3. The method for verifying calibrated extrinsic parameter values of a camera according to claim 1 or 2, wherein the verifying, based on a comparison between an extrinsic parameter value corresponding to a minimum first reprojection error in the
first reprojection errors and the calibrated extrinsic parameter values, whether the calibrated extrinsic parameter values are optimal values comprises:
S36: if the extrinsic parameter value corresponding to the minimum first reprojection error in the current iteration is equal to the calibrated extrinsic parameter values, repeating steps S30 and S32 based on first reprojection errors obtained in a next iteration, until the number of iterations is reached.

4. The method for verifying calibrated extrinsic parameter values of a camera according to claim 2 or 3, wherein the verifying, based on a comparison between an extrinsic parameter value corresponding to a minimum first reprojection error in the first reprojection errors and the calibrated extrinsic parameter values, whether the calibrated extrinsic parameter values are optimal values further comprises:
if throughout all of the number of iterations, the extrinsic parameter value corresponding to the minimum first reprojection error is equal to the calibrated extrinsic parameter values, verifying the calibrated extrinsic parameter values as optimal values.

5. The method for verifying calibrated extrinsic parameter values of a camera according to any one of claims 1 to 4, further comprising:
obtaining the calibrated extrinsic parameter values of the camera based on three-dimensional coordinate points under a world coordinate system, corresponding pixels under an image coordinate system, and intrinsic camera parameters.

6. The method for verifying calibrated extrinsic parameter values of a camera according to any one of claims 1 to 5, further comprising:
mapping the three-dimensional coordinate point under the world coordinate system to the image coordinate system based on the calibrated extrinsic parameter values, to obtain a calculated value of the corresponding pixel;
calculating (S502) a Euclidean distance between an observed value of the pixel and the calculated value;
obtaining (S503) a second reprojection error based on the Euclidean distance; and
verifying (S504), based on the second reprojection error, whether the calibrated extrinsic parameter values are optimal values;
wherein said first reprojection error is a Euclidean distance between an observed value of a pixel point participating in said iteration and said calculated value, and said second reprojection error is a Euclidean distance between an observed value of a pixel point not participating in said iteration and said calculated value.

7. The method for verifying calibrated extrinsic parameter values of a camera according to any one of claims 1 to 6, further comprising:
selecting (S601) the same pixel point from multiple image coordinate systems of a multi-lens camera;
mapping (S602) the selected pixel under any one of the plurality of image coordinate systems to another image coordinate system, to obtain a corresponding calculated value;
calculating (S603) a Euclidean distance between an observed value of the pixel under the another image coordinate system and the calculated value;
obtaining (S604) an inter-camera reprojection error based on the Euclidean distance; and
verifying (S605), based on the inter-camera reprojection error, whether the calibrated extrinsic parameter values are optimal values.

8. The method for verifying calibrated extrinsic parameter values of a camera according to any one of claims 1 to 7, further comprising:
comparing the calibrated extrinsic parameter values with a design value to check a deviation degree of the camera.

9. An data processing electronic device, comprising a processor and a storage apparatus adapted to store a plurality of pieces of program code, wherein the program code is adapted to be loaded and run by the processor to perform a method for verifying calibrated extrinsic parameter values of a camera according to any one of claims 1 to 8.

10. A computer-readable storage medium comprising instructions which, when executed by a computer, cause the computer to carry out the method for verifying calibrated extrinsic parameter values of a camera according to any one of claims 1 to 8.

## Patentansprüche

1. Computerimplementiertes Verfahren zum Verifizieren kalibrierter extrinsischer Parameterwerte einer Kamera, wobei das Verfahren umfasst:
Festlegen einer Reihe von Iterationen zum Anwenden von Störungen,
Anwenden (S101) einer Vielzahl von Störungen auf die kalibrierten extrinsischen Parameterwerte der Kamera und Erhalten mindestens eines gestörten extrinsischen Parameterwerts auf Grundlage einer der angewandten Störungen;
Berechnen (S102) erster Reprojektionsfehler, die jeweils den kalibrierten extrinsischen Parameterwerten und dem mindestens einen gestörten extrinsischen Parameterwert entsprechen; und
Verifizieren (S103), auf Grundlage eines Vergleichs zwischen einem extrinsischen Parameterwert, der einem minimalen ersten Reprojektionsfehler in den ersten Reprojektionsfehlern entspricht, und den kalibrierten extrinsischen Parameterwerten, ob die kalibrierten extrinsischen Parameterwerte optimale Werte sind, umfassend:
S30: Vergleichen erster Reprojektionsfehler, die einer aktuellen Iteration entsprechen, um einen minimalen ersten Reprojektionsfehler in den ersten Reprojektionsfehlern zu erhalten;
S32: Vergleichen, ob ein extrinsischer Parameterwert, der dem minimalen ersten Reprojektionsfehler entspricht, gleich den kalibrierten extrinsischen Parameterwerten ist;
S34: falls der extrinsische Parameterwert, der dem minimalen ersten Reprojektionsfehler in der aktuellen Iteration entspricht, nicht gleich den kalibrierten extrinsischen Parameterwerten ist, Verifizieren der kalibrierten extrinsischen Parameterwerte als nicht optimale Werte.

2. Verfahren zum Verifizieren kalibrierter extrinsischer Parameterwerte einer Kamera nach Anspruch 1, wobei das Anwenden einer Vielzahl von Störungen auf die kalibrierten extrinsischen Parameterwerte der Kamera und Erhalten mindestens eines gestörten extrinsischen Parameterwerts basierend auf einer der angewandten Störungen umfasst:
in irgendeiner der Iterationen Anwenden mindestens einer Störung auf die kalibrierten extrinsischen Parameterwerte, um mindestens einen entsprechenden gestörten extrinsischen Parameterwert zu erhalten, wobei eine Störungsschrittgröße von Störungen, die in einer Iteration angewendet werden, kleiner als eine Störungsschrittgröße von Störungen ist, die in einer vorherigen Iteration angewandt wurden.

3. Verfahren zum Verifizieren kalibrierter extrinsischer Parameterwerte einer Kamera nach Anspruch 1 oder 2, wobei das Verifizieren auf Grundlage eines Vergleichs zwischen einem extrinsischen Parameterwert, der einem minimalen ersten Reprojektionsfehler in den ersten Reprojektionsfehlern entspricht, und den kalibrierten extrinsischen Parameterwerten, ob die kalibrierten extrinsischen Parameterwerte optimale Werte sind, umfasst:
S36: falls der extrinsische Parameterwert, der dem minimalen ersten Reprojektionsfehler in der aktuellen Iteration entspricht, gleich den kalibrierten extrinsischen Parameterwerten ist, Wiederholen der Schritte S30 und S32 auf Grundlage von ersten Reprojektionsfehlern, die in einer nächsten Iteration erhalten werden, bis die Anzahl von Iterationen erreicht ist.

4. Verfahren zum Verifizieren kalibrierter extrinsischer Parameterwerte einer Kamera nach Anspruch 2 oder 3, wobei das Verifizieren auf Grundlage eines Vergleichs zwischen einem extrinsischen Parameterwert, der einem minimalen ersten Reprojektionsfehler in den ersten Reprojektionsfehlern entspricht, und den kalibrierten extrinsischen Parameterwerten, ob die kalibrierten extrinsischen Parameterwerte optimale Werte sind, ferner umfasst:
falls während der gesamten Anzahl von Iterationen der extrinsische Parameterwert, der dem minimalen ersten Reprojektionsfehler entspricht, gleich den kalibrierten extrinsischen Parameterwerten ist, Verifizieren der kalibrierten extrinsischen Parameterwerte als optimale Werte.

5. Verfahren zum Verifizieren kalibrierter extrinsischer Parameterwerte einer Kamera nach einem der Ansprüche 1 bis 4, ferner umfassend:
Erhalten der kalibrierten extrinsischen Parameterwerte der Kamera auf Grundlage von dreidimensionalen Koordinatenpunkten in einem Weltkoordinatensystem, entsprechenden Pixeln in einem Bildkoordinatensystem und intrinsischen Kameraparametern.

6. Verfahren zum Verifizieren kalibrierter extrinsischer Parameterwerte einer Kamera nach einem der Ansprüche 1 bis 5, ferner umfassend:
Abbilden des dreidimensionalen Koordinatenpunkts im Weltkoordinatensystem auf das Bildkoordinatensystem auf Grundlage der kalibrierten extrinsischen Parameterwerte, um einen berechneten Wert des entsprechenden Pixels zu erhalten;
Berechnen (S502) eines euklidischen Abstands zwischen einem beobachteten Wert des Pixels und dem berechneten Wert;
Erhalten (S503) eines zweiten Reprojektionsfehlers auf Grundlage des euklidischen Abstands; und
Verifizieren (S504), auf Grundlage des zweiten Reprojektionsfehlers, ob die kalibrierten extrinsischen Parameterwerte optimale Werte sind;
wobei der erste Reprojektionsfehler ein euklidischer Abstand zwischen einem beobachteten Wert eines Pixelpunkts, der Teil der Iteration ist, und dem berechneten Wert ist und der zweite Reprojektionsfehler ein euklidischer Abstand zwischen einem beobachteten Wert eines Pixelpunkts, der nicht Teil der Iteration ist, und dem berechneten Wert ist.

7. Verfahren zum Verifizieren kalibrierter extrinsischer Parameterwerte einer Kamera nach einem der Ansprüche 1 bis 6, ferner umfassend:
Auswählen (S601) des gleichen Pixelpunkts aus mehreren Bildkoordinatensystemen einer Mehrlinsenkamera;
Abbilden (S602) des ausgewählten Pixels in irgendeinem der Vielzahl von Bildkoordinatensystemen auf ein anderes Bildkoordinatensystem, um einen entsprechenden berechneten Wert zu erhalten;
Berechnen (S603) eines euklidischen Abstands zwischen einem beobachteten Wert des Pixels in dem anderen Bildkoordinatensystem und dem berechneten Wert;
Erhalten (S604) eines Inter-Kamera-Reprojektionsfehlers auf Grundlage des euklidischen Abstands; und
Verifizieren (S605), auf Grundlage des Inter-Kamera-Reprojektionsfehlers, ob die kalibrierten extrinsischen Parameterwerte optimale Werte sind.

8. Verfahren zum Verifizieren kalibrierter extrinsischer Parameterwerte einer Kamera nach einem der Ansprüche 1 bis 7, ferner umfassend:
Vergleichen der kalibrierten extrinsischen Parameterwerte mit einem Konstruktionswert, um einen Abweichungsgrad der Kamera zu prüfen.

9. Elektronische Datenverarbeitungsvorrichtung, die einen Prozessor und eine Speichereinrichtung umfasst, die dazu ausgelegt ist, eine Vielzahl von Programmcode-Teilen zu speichern, wobei der Programmcode dazu ausgelegt ist, vom Prozessor geladen und ausgeführt zu werden, um ein Verfahren zum Verifizieren kalibrierter extrinsischer Parameterwerte einer Kamera nach einem der Ansprüche 1 bis 8 durchzuführen.

10. Computerlesbares Speichermedium, das Anweisungen umfasst, die, wenn sie von einem Computer ausgeführt werden, bewirken, dass der Computer das Verfahren zum Verifizieren kalibrierter extrinsischer Parameterwerte einer Kamera nach einem der Ansprüche 1 bis 8 ausführt.

## Revendications

1. Procédé mis en œuvre par ordinateur de vérification de valeurs calibrées de paramètres extrinsèques d'une caméra, le procédé comprenant :
le réglage d'un certain nombre d'itérations pour appliquer des perturbations,
l'application (S101) d'une pluralité de perturbations aux valeurs calibrées de paramètres extrinsèques de la caméra, et l'obtention d'au moins une valeur perturbée de paramètres extrinsèques sur la base de l'une quelconque des perturbations appliquées ;
le calcul (S102) des premières erreurs de reprojection correspondant respectivement aux valeurs calibrées de paramètres extrinsèques et à la ou aux valeurs perturbées de paramètres extrinsèques ; et
la vérification (S103), sur la base d'une comparaison entre une valeur de paramètres extrinsèques correspondant à une première erreur minimale de reprojection parmi les premières erreurs de reprojection et les valeurs calibrées de paramètres extrinsèques, si les valeurs calibrées de paramètres extrinsèques sont des valeurs optimales, comprenant :
S30 : la comparaison de premières erreurs de reprojection correspondant à une itération courante, pour obtenir une première erreur minimale de reprojection parmi les premières erreurs de reprojection ;
S32 : la comparaison pour savoir si une valeur de paramètres extrinsèques correspondant à la première erreur minimale de reprojection est égale aux valeurs calibrées de paramètres extrinsèques ;
S34 : si la valeur de paramètres extrinsèques correspondant à la première erreur minimale de reprojection dans l'itération courante n'est pas égale aux valeurs calibrées de paramètres extrinsèques, vérifier les valeurs calibrées de paramètres extrinsèques en tant que valeurs non optimales.

2. Procédé de vérification de valeurs calibrées de paramètres extrinsèques d'une caméra selon la revendication 1, dans lequel l'application d'une pluralité de perturbations aux valeurs calibrées de paramètres extrinsèques de la caméra et l'obtention d'au moins une valeur perturbée de paramètres extrinsèques sur la base de l'une quelconque des perturbations appliquées comprend :
dans l'une quelconque des itérations, l'application d'au moins une perturbation aux valeurs calibrées de paramètres extrinsèques pour obtenir au moins une valeur perturbée correspondante de paramètres extrinsèques, une taille d'étape de perturbation des perturbations appliquées dans une itération étant inférieure à une taille d'étape de perturbation des perturbations appliquées dans une itération précédente.

3. Procédé de vérification de valeurs calibrées de paramètres extrinsèques d'une caméra selon la revendication 1 ou 2, dans lequel la vérification, sur la base d'une comparaison entre une valeur de paramètres extrinsèques correspondant à une première erreur minimale de reprojection parmi les
premières erreurs de reprojection et les valeurs calibrées de paramètres extrinsèques, pour savoir si les valeurs calibrées de paramètres extrinsèques sont des valeurs optimales, comprend :
S36 : si la valeur de paramètres extrinsèques correspondant à la première erreur minimale de reprojection dans l'itération courante est égale aux valeurs calibrées de paramètres extrinsèques, répéter les étapes S30 et S32 sur la base des premières erreurs de reprojection obtenues dans une itération suivante, jusqu'à ce que le nombre d'itérations soit atteint.

4. Procédé de vérification de valeurs calibrées de paramètres extrinsèques d'une caméra selon la revendication 2 ou 3, dans lequel la vérification, sur la base d'une comparaison entre une valeur de paramètres extrinsèques correspondant à une première erreur minimale de reprojection parmi les premières erreurs de reprojection et les valeurs calibrées de paramètres extrinsèques, pour savoir si les valeurs calibrées de paramètres extrinsèques sont des valeurs optimales, comprend en outre :
si, pendant la totalité du nombre d'itérations, la valeur de paramètres extrinsèques correspondant à la première erreur minimale de reprojection est égale aux valeurs calibrées de paramètres extrinsèques, vérifier les valeurs calibrées de paramètres extrinsèques en tant que valeurs optimales.

5. Procédé de vérification de valeurs calibrées de paramètres extrinsèques d'une caméra selon l'une quelconque des revendications 1 à 4, comprenant en outre :
l'obtention des valeurs calibrées de paramètres extrinsèques de la caméra sur la base de points de coordonnées tridimensionnels sous un système de coordonnées mondiales, de pixels correspondants sous un système de coordonnées d'image et de paramètres intrinsèques de caméra.

6. Procédé de vérification de valeurs calibrées de paramètres extrinsèques d'une caméra selon l'une quelconque des revendications 1 à 5, comprenant en outre :
le mappage du point de coordonnées tridimensionnel sous le système de coordonnées mondiales sur le système de coordonnées d'image sur la base des valeurs calibrées de paramètres extrinsèques, pour obtenir une valeur calculée du pixel correspondant ;
le calcul (S502) d'une distance euclidienne entre une valeur observée du pixel et la valeur calculée ;
l'obtention (S503) d'une seconde erreur de reprojection basée sur la distance euclidienne ; et
la vérification (S504), sur la base de la seconde erreur de reprojection, pour savoir si les valeurs calibrées de paramètres extrinsèques sont des valeurs optimales ;
dans lequel ladite première erreur de reprojection est une distance euclidienne entre une valeur observée d'un point de pixel participant à ladite itération et ladite valeur calculée, et ladite seconde erreur de reprojection est une distance euclidienne entre une valeur observée d'un point de pixel ne participant pas à ladite itération et ladite valeur calculée.

7. Procédé de vérification de valeurs calibrées de paramètres extrinsèques d'une caméra selon l'une quelconque des revendications 1 à 6, comprenant en outre :
la sélection (S601) du même point de pixel à partir de multiples systèmes de coordonnées d'image d'une caméra multi-objectifs ;
le mappage (S602) du pixel sélectionné sous l'un quelconque de la pluralité de systèmes de coordonnées d'image sur un autre système de coordonnées d'image, pour obtenir une valeur calculée correspondante ;
le calcul (S603) d'une distance euclidienne entre une valeur observée du pixel sous l'autre système de coordonnées d'image et la valeur calculée ;
l'obtention (S604) d'une erreur de reprojection inter-caméra basée sur la distance euclidienne ; et
la vérification (S605), sur la base de l'erreur de reprojection inter-caméra, pour savoir si les valeurs calibrées de paramètres extrinsèques sont des valeurs optimales.

8. Procédé de vérification de valeurs calibrées de paramètres extrinsèques d'une caméra selon l'une quelconque des revendications 1 à 7, comprenant en outre :
la comparaison des valeurs calibrées de paramètres extrinsèques avec une valeur de conception pour vérifier un degré de déviation de la caméra.

9. Dispositif électronique de traitement de données, comprenant un processeur et un appareil de stockage adapté pour stocker une pluralité d'éléments de code de programme, dans lequel le code de programme est adapté pour être chargé et exécuté par le processeur pour exécuter un procédé de vérification des valeurs calibrées de paramètres extrinsèques d'une caméra selon l'une quelconque des revendications 1 à 8.

10. Support de stockage lisible par ordinateur comprenant des instructions qui, lorsqu'elles sont exécutées par un ordinateur, amènent l'ordinateur à mettre en œuvre le procédé de vérification des valeurs calibrées de paramètres extrinsèques d'une caméra selon l'une quelconque des revendications 1 à 8.
